# EUROPÄISCHE PATENTSCHRIFT

(11) **EP 1 993 812 B1**
(45) Veröffentlichungstag und Bekanntmachung des Hinweises auf die Patenterteilung: **06.07.2011**
(21) Anmeldenummer: 08707159.3
(22) Anmeldetag: 21.01.2008
(51) Int. Cl.: B29C 67/00, B22F 3/105

(54) **VERFAHREN UND VORRICHTUNG ZUM HERSTELLEN EINES DREIDIMENSIONALEN OBJEKTS**
METHOD AND DEVICE FOR THE PRODUCTION OF A THREE-DIMENSIONAL OBJECT
PROCÉDÉ ET DISPOSITIF DE PRODUCTION D'UN OBJET TRIDIMENSIONNEL

(30) Priorität: 27.03.2007 DE 102007014683
(43) Veröffentlichungstag der Anmeldung: 26.11.2008
(73) Patentinhaber: EOS GmbH Electro Optical Systems, 82152 Krailling (DE)
(72) Erfinder: DIMTER, Marc, 70806 Kornwestheim (DE); MAYER, Ralph, 70806 Kornwestheim (DE); HÜMMELER, Ludger, 57368 Lennestadt (DE); SALZBERGER, Rainer, 81249 München (DE); KOTILA, Juha, 20540 Turku (FI); SYVÄNEN, Tatu, 21280 Raisio (FI)
(74) Vertreter: Prüfer & Partner GbR European Patent Attorneys
(86) Internationale Anmeldenummer: PCT/EP2008/000426
(87) Internationale Veröffentlichungsnummer: WO 2008/116518

(56) Entgegenhaltungen:
- EP-A- 1 419 836
- WO-A-01/93786
- US-A- 5 155 324
- US-B1- 6 366 825

## Beschreibung

Die Erfindung betrifft ein Verfahren und eine Vorrichtung zum Herstellen eines dreidimensionalen Objekts durch sukzessives linienförmiges Verfestigen von Schichten eines Aufbaumaterials an den dem Querschnitt des Objekts in der jeweiligen Schicht entsprechenden Stellen.

Beim Lasersintern sowie in der Stereolithographie und sonstigen verwandten Schichtbauverfahren sind verschiedene Belichtungsmuster für Füllbereiche bekannt, d.h. für Bereiche, die innerhalb der den Umriß des Objekts in der jeweiligen Schicht bestimmenden Kontur liegen.

Insbesondere um Schwundeffekte und Eigenspannungen zu minimieren, sind Belichtungsmuster entwickelt worden, die die zu belichtende Fläche in Teilflächen aufteilen und gegebenenfalls diese in unterschiedlichen Reihenfolgen belichten. Derartige Belichtungsmuster sind beispielsweise in der EP 0 429 196 B1, der DE 42 33 812 C1 für die Stereolithographie und in der DE 100 42 134 C2 für das Laser-Sintern beschrieben. Typischerweise wird von Schicht n bis Schicht n+1 die Richtung der Belichtungsvektoren um 90° gedreht, was dazu führt, daß in jeder zweiten Schicht die gleiche Belichtungsorientierung besteht. Auch beim Elektronenstrahlsintern werden spezielle Belichtungstechniken verwendet, z.B. eine helix- oder eine mäanderförmige Belichtung von Teilbereichen wie in der WO 2004/056509 beschrieben ist.

Aus der EP 0 590 956 A1 ist ein Belichtungsverfahren für die Stereolithographie bekannt, bei dem, um den Verzug des hergestellten Objekts zu verringern ein Lichtstrahl über eine Schicht in einer Mehrzahl von parallelen Vektoren geführt wird, wobei die Richtung der Vektoren sich von einer Schicht zur nachfolgenden Schicht um 180°, 90° oder 45° ändert.
Diese Verfahren weisen Nachteile auf. In jeder Schicht werden Materialeigenschaften mit einer Vorzugsrichtung erzeugt, bzw. bei Kreuzbelichtung mit zwei Vorzugsrichtungen. Die aus der häufigen Wiederholung von wenigen Belichtungsrichtungen resultierende Anisotropie führt zu einer Beeinträchtigung der mechanische Eigenschaften des ganzen Bauteils. Auch die Qualität der Oberfläche kann beeinträchtigt sein, bespielsweise kann es zu Porenbildung kommen.

Ferner sind weitere Belichtungstechniken für das Lasersintern - hauptsächlich zum Vermeiden von Verzug - bekannt, beispielsweise eine spiralförmige Belichtung wie in der US 6,676,892 B2 oder eine zwiebelringartige Belichtung wie in der DE 101 12 591 A1 beschrieben ist. Diese Verfahren variieren die Belichtungsrichtungen innerhalb einer Schicht, wiederholen aber typischerweise an vielen Stellen die gleiche Belichtungsrichtung in übereinanderliegenden Schichten und weisen daher ähnliche Nachteile auf. US-A-5,155,324 offenbart ein Verfahren gemäβ dem Oberbegriff des Anspruchs 1 zum Herstellen eines dreidimensionalen Objekts durch sukzessives Verfestigen von Schichten eines Aufbaumaterials an den dem Querschnitt des Objekts in der jeweiligen Schicht entsprechenden Stellen, wobei wenigstens ein Teilbereich einer Schicht so verfestigt wird, dass ein Muster entsteht, welches eine Mehrzahl von im Wesentlichen parallelen, Verfestigungslinien enthält, und wenigstens ein Teilbereich einer nachfolgenden Schicht so verfestigt wird, dass ein Muster entsteht, welches eine Mehrzahl von im Wesentlichen parallelen, Verfestigungslinien enthält, die gegenüber den Verfestigungslinien des Musters der vorhergehenden Schicht um einen Winkel gedreht sind, der verschieden von 10° oder 60° ist.

WO-A-01/93786 offenbart ein LENS-Verfahren (Laser Engineered Net Shape), bei dem ein Partikelstrahl mit einer Düse aufgebracht und gleichzeitig durch einen Laser vollständig verfestigt wird. Der Partikelstrahl bildet pro Schicht ein Muster bestehend aus Linien, wobei die Linien von benachbarten Schichten einen Winkel definieren, der verschieden von 15, 105, 120 oder 135° ist.

Weitere Verfahren sind aus US-B1-6,366,825, die ebenfalls eine Vorrichtung gemäβ dem Oberbegriff des Anspruchs 15 offenbart und EP-A1-1 419 836 bekannt.

Es ist Aufgabe der vorliegenden Erfindung, ein Verfahren zur Herstellung eines dreidimensionalen Objekts und eine Vorrichtung zur Durchführung des Verfahrens bereitzustellen, bei der die mechanischen Eigenschaften der hergestellten Objekte verbessert sind.

Die Aufgabe wird gelöst durch ein Verfahren nach Patentanspruch 1 und eine Vorrichtung nach Patentanspruch 15. Weiterbildungen der Erfindung sind in den Unteransprüchen angegeben.

Das erfindungsgemäße Verfahren hat den Vorteil, daß die Spannungsbildung im Bauteil homogenisiert wird. Ferner werden Teilflächen-Übergänge oder Startpunkte für die Belichtung von Teilflächen so verteilt, daß sie keine Linien oder Flächen im Objekt bilden. Damit werden Schwachstellen vermieden und Spannungen reduziert und/oder homogenisiert.

Die mechanischen Eigenschaften und die Genauigkeit eines so gebildeten Objekts sind verbessert.

Weitere Merkmale und Zweckmäßigkeiten ergeben sich aus der Beschreibung eines Ausführungsbeispiels anhand der Figuren.

Von den Figuren zeigen:
- Fig. 1: eine Ausführungsform der Vorrichtung;
- Fig. 2: eine schematische Darstellung einer Ausführungsform von Schritten des Verfahrens;
- Fig. 3: eine schematische Darstellung eines Objekts mit Schich- ten, die gemäß den Schritten von Fig. 2 belichtet wur- den;
- Fig. 4: eine schematische Darstellung eines abgewandelten Be- lichtungstyps für eine einzelne Schicht;
- Fig. 5: eine schematische Darstellung eines weiteren abgewan- delten Belichtungstyps für eine einzelne Schicht;
- Fig. 6: eine Abwandlung des in Fig. 2 dargestellten Verfahrens.

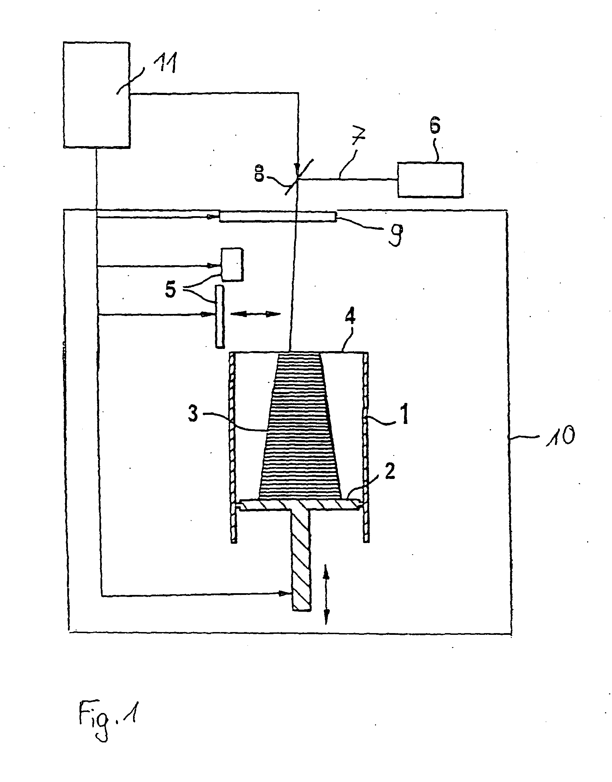

Fig. 1 zeigt eine Lasersintervorrichtung als Ausführungsbeispiel einer Vorrichtung zur schichtweisen Herstellung eines dreidimensionalen Objekts. Die Lasersintervorrichtung weist einen nach oben hin offenen Behälter 1 mit einem darin in vertikaler Richtung bewegbaren Träger 2 auf, der das zu bildende Objekt 3 trägt. Der Träger 2 wird in vertikaler Richtung so eingestellt, daß die jeweils zu verfestigende Schicht des Objekts in einer Arbeitsebene 4 liegt. Weiter ist eine Aufbringvorrichtung 5 zum Aufbringen des durch elektromagnetische Strahlung verfestigbaren pulverförmigen Aufbaumaterials vorgesehen. Die Vorrichtung weist ferner einen Laser 6 auf. Der durch den Laser 6 erzeugte Laserstrahl 7 wird durch eine Ablenkeinrichtung 8 auf ein Fenster 9 gelenkt und von diesem in die Prozeßkammer 10 hindurchgelassen und in einem vorbestimmen Punkt in der Arbeitsebene fokussiert. Üblicherweise ist eine Fokussieroptik (nicht dargestellt) vorgesehen. Die Ablenkeinrichtung 8 besteht beispielsweise aus zwei Galvanometerspiegeln, die den Strahl an jeden beliebigen Punkt der Arbeitsebene 4 ablenken können. Es ist ferner eine Steuereinheit 11 vorgesehen, über die die Bestandteile der Vorrichtung in koordinierter Weise zum Durchführen des Bauprozesses gesteuert werden. Insbesondere beinhaltet die Steuereinheit eine Steuerung zum Ablenken und gegebenenfalls zum Modulieren des Laserstrahls gemäß einem gewünschten Belichtungsmuster.

Das dreidimensionale Objekt wird Schicht für Schicht durch Verfestigen des pulverförmigen Aufbaumaterials mit dem Laserstrahl an den dem jeweiligen Querschnitt des Objekts in der Schicht entsprechenden Stellen erzeugt. Als pulverförmiges Aufbaumaterial können alle lasersinterbaren Pulver verwendet werden. Das Verfahren eignet sich jedoch besonders für das Lasersintern bzw. -schmelzen von Metallpulver.

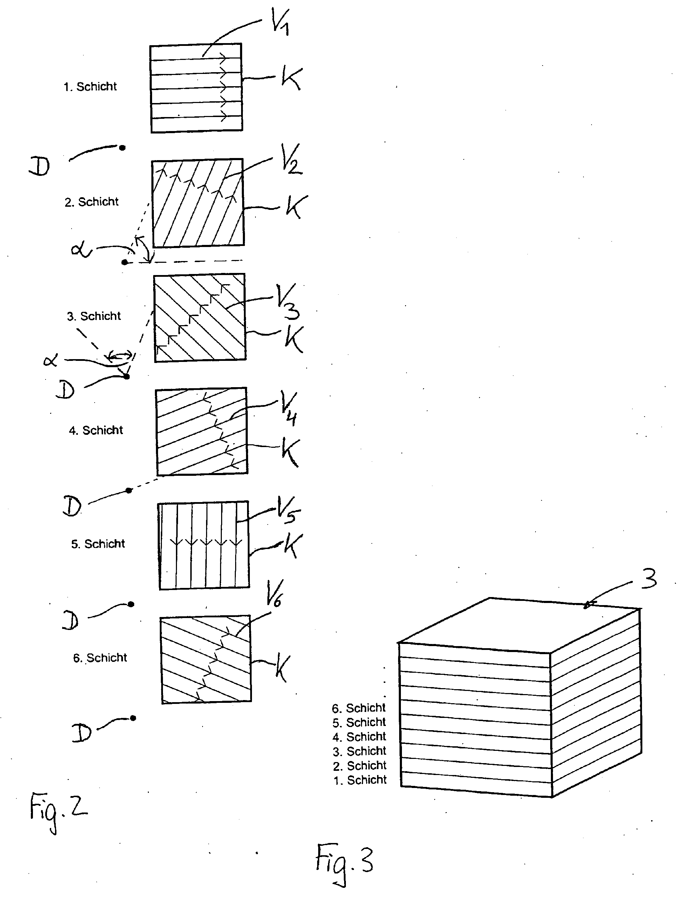

Ein erstes Ausführungsbeispiel des Verfahrens ist in den Figuren 2 und 3 gezeigt. Eine erste Schicht, die nicht notwendigerweise die allererste Schicht des zu bildenden Objekts sein muß, wird derart belichtet, dass der Laserstrahl in dem Füllbereich innerhalb der Kontur K, die den Umriß des Objekts angibt, in einer Mehrzahl paralleler Vektoren V₁ über die Schicht geführt wird, wobei das Pulver verfestigt wird. Im einer darauf folgenden zweiten Schicht, wird der Laserstrahl in parallelen Vektoren V₂ über die Schicht geführt, wobei die Vektoren V₂ mit den Vektoren V1 der ersten Schicht einen Winkel α von 67° einschließen. Der Drehpunkt D liegt dabei außerhalb des zu verfestigenden Bereichs. In der dritten bis in der beispielhaft gezeigten sechsten Schicht wird die Richtung der Vektoren V₃ bis V₆ jeweils um den Winkel α = 67° zur vorhergehenden Schicht gedreht.
Das Belichtungsmuster wird somit so verändert, dass im vorliegenden Fall erst nach 360 Schichten die Orientierung der Belichtungsvektoren wiederholt werden würde, und erst nach 18 Schichten eine Orientierung vorkommt, die sich um weniger als 10° von einer bereits verwendeten Orientierung unterscheidet. In dem in Fig. 3 gezeigten Objekt wird damit die Spannungsbildung homogenisiert und es bilden sich keine Linien oder Flächen, die Schwachstellen im Objekt bilden. Durch die rotierende Belichtung wird eine Brüchigkeit des Bauteils verhindert und damit die mechanische Stabilität erhöht.

Ferner liegen die Anfänge der Belichtungsvektoren von Schicht zu Schicht immer an anderen Stellen. Dadurch ergibt sich auch eine Verbesserung der Oberfläche des gebildeten Objekts. Beispielesweise treten keine durch Wiederholung von Belichtungsrichtungen entstehenden Moiré-Muster an der Oberfläche auf.

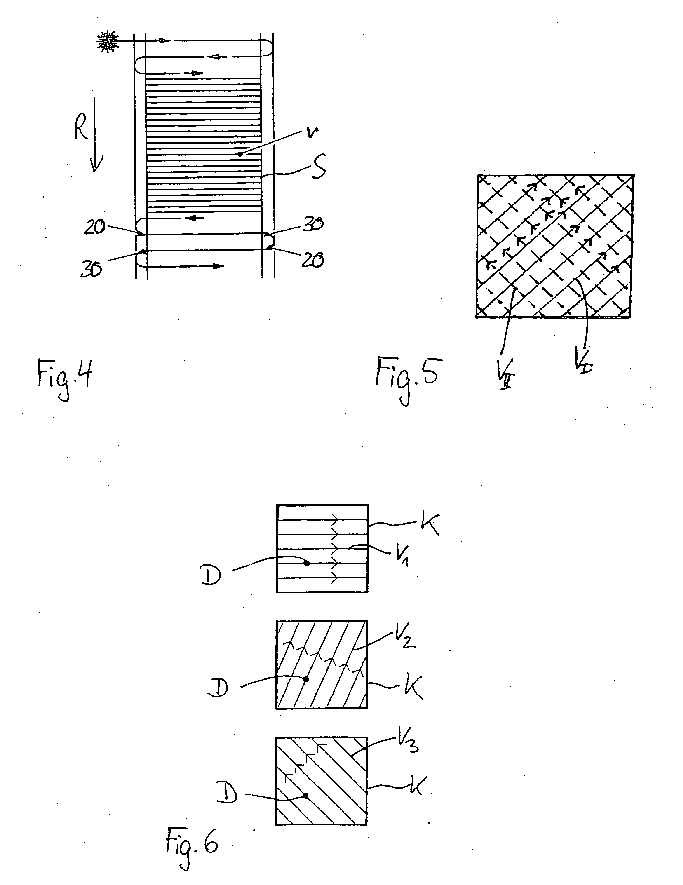

In einer Abwandlung wird die Schicht derart belichtet, dass anstelle der einzelnen Vektoren V, die in Fig. 2 gezeigt sind, Streifen S verfestigt werden, von denen einer in Fig. 4 dargestellt ist. Dabei besteht ein Streifen S aus zueinander parallelen, senkrecht zur Längsrichtung des Streifens verlaufenden Einzelvektoren v. Die Beschleunigungsphase 20 und die Abbremsphase 30 des Laserstrahls liegen außerhalb des zu belichtenden Bereichs des Streifens. Der Laser ist in diesen Phasen ausgeschaltet. Eine Schicht wird durch eine Mehrzahl von parallelen Streifen (nicht dargestellt) verfestigt. Die Richtung R der Streifen, die durch die Fortbewegungsrichtung des Laserstrahls definiert ist, ändert sich in aufeinander folgenden Schichten jeweils um 67°.

Die Zugfestigkeit und die Streckgrenze für Zugproben, die aus einem metallischen Pulver mit diesem Belichtungsmuster hergestellt werden, sind gegenüber einer Belichtung, bei der die Richtung der Streifen von Schicht zu Schicht um 90° geändert wird, erhöht.

In einer weiteren Abwandlung wird anstelle der in Fig. 2 gezeigten Belichtung einer einzelnen Schicht mit einer Anzahl von parallelen Vektoren eine Doppelbelichtung dahingehend durchgeführt, dass zu einer ersten Belichtung mit einer ersten Gruppe von parallelen Vektoren V_{I} eine zweite Belichtung mit einer zweiten Gruppe von parallelen Vektoren V_{II}, die zu der ersten Gruppe unter einem bestimmten Winkel, vorzugsweise 90°, verlaufen, erfolgt. Damit ergibt sich ein Muster einer Kreuzschraffur, wie in Fig. 5 gezeigt. In der nachfolgenden zweiten Schicht wird dieses Muster um 67° über dem Muster der vorhergehenden Schicht gedreht und in der jeweils nachfolgenden Schicht jeweils wieder um 67° gedreht.

In einer in Fig. 6 gezeigten Abwandlung liegt der Drehpunkt D innerhalb der Kontur K eines zu verfestigenden Bereichs.

Die Erfindung ist nicht darauf beschränkt, dass der Winkel α genau 67° beträgt. Vielmehr wird die Belichtungsrichtung von Schicht zu Schicht so verändert, dass erst nach einer Vielzahl von Schichten oder überhaupt nicht die Orientierung der Belichtungsvektoren oder der Streifen wiederholt wird. Besonders bevorzugt, ist ein Winkel von circa 67°. Ferner bevorzugt ist, dass der Winkel kein ganzzahliger Teil von 360° ist. Außerdem bevorzugt ist, dass der Winkel keinen von eins verschiedenen ganzzahligen gemeinsamen Teiler von 360° aufweist.

In einer weiteren Abwandlung ist der Winkel, um den die Vektoren oder Streifen beim Belichten einer nachfolgenden Schicht gedreht werden nicht von Schicht zu Schicht konstant. Der Winkel kann auch durch einen Zufallsgenerator bestimmt werden, wobei vorteilhafterweise ein Mindestwinkel gewählt wird, beispielsweise 20°.

In einer weiteren Abwandlung wird nicht die gesamte Schicht mit durchgehenden Streifen belichtet, sondern es werden Teilbereiche belichtet, wobei die Streifen der Teilbereiche Streifen benachbarter Teilbereiche bereits einen Winkel aufweisen können, üblicherweise 90°. Beispielsweise ist eine Belichtung nach Art eines Schachbrettmusters denkbar. In der darauffolgenden Schicht wird die Richtung aller Streifen für jeden Teilbereich um den Winkel α gedreht.

Die Erfindung ist prinzipiell auf alle bestehenden Belichtungsmuster anzuwenden.

Abwandlungen der Vorrichtung sind möglich. Beispielsweise kann anstelle der Ablenkung des Laserstrahls auch der Träger in entsprechender Weise bewegt, insbesondere rotiert werden, so daß die Belichtungsmuster durch Bewegung des Trägers relativ zu einem feststehenden Strahl erzeugt werden. Alternativ kann auch die Ablenkeinrichtung rotiert werden.

Ferner ist die Erfindung auf andere Schichtbauverfahren anwendbar. Dazu gehören beispielsweise die Stereolithographie, bei der ein lichthärtbares Harz verfestigt wird, Schichtbauverfahren mit entweder flüssigem oder pulverförmigem Aufbaumaterial, die eine Elektronenstrahlquelle oder eine andere Teilchenstrahlquelle als Energiequelle verwenden und das dreidimensionale Drucken, bei dem pulverförmiges Aufbaumaterial mittels eines Strahls eines Klebermaterials, der als verfestigender Energiestrahl dient, verfestigt wird. Ferner ist auch die Anwendung in dem sogenannten FDM-Verfahren (Fused Model Deposition) denkbar, bei dem das Material in Strangform auf eine Unterlage oder eine zuvor verfestigte Schicht aufgetragen wird und die Stränge durch Schmelzen zu einem zusammenhängenden Objekt verbunden und damit verfestigt werden.

Die Vektoren und die Streifen oder die Stränge aus verfestigtem Material der zuvorgenannten Ausführungsbeispiele bilden Verfestigungslinien. Die Erfindung ist jedoch nicht auf diese Beispiele beschränkt. Die Verfestigungslinien können auch aus Punkten bestehen, z.B. durch Verwendung eines gepulsten Lasers. Die Verfestigungslinien müssen nicht gerade sein, sondern können auch eine Krümmung aufweisen.

## Patentansprüche

1. Verfahren zum Herstellen eines dreidimensionalen Objekts durch sukzessives Verfestigen von Schichten eines Aufbaumaterials an den dem Querschnitt des Objekts in der jeweiligen Schicht entsprechenden Stellen, wobei wenigstens ein Teilbereich einer Schicht so verfestigt wird, dass ein Muster entsteht, welches eine Mehrzahl von im wesentlichen parallelen Verfestigungslinien (V, S) enthält, und wenigstens ein Teilbereich einer nachfolgenden Schicht so verfestigt wird, dass ein Muster entsteht, welches eine Mehrzahl von im wesentlichen parallelen Verfestigungslinien enthält, die gegenüber den Verfestigungslinien des Musters der vorhergehenden Schicht um einen Winkel (α) gedreht sind, **dadurch gekennzeichnet, dass** der Winkel (α) verschieden von 180°, 90° und 45° ist,
wobei eine Verfestigungslinie einen Streifen (S) bildet, der eine Mehrzahl von nebeneinander liegenden Vektoren (v) enthält, die sich quer zur Längsrichtung (R) des Streifens erstrecken.

2. Verfahren gemäß Anspruch 1, wobei die Verfestigungslinien eines entsprechenden Teilbereichs frühestens nach fünf nachfolgenden Schichten wieder im wesentlichen parallel zu den ersten Verfestigungslinien verlaufen.

3. Verfahren nach Anspruch 1 oder 2, wobei die Teilbereiche aufeinanderfolgender Schichten übereinander liegen.

4. Verfahren nach einem der Ansprüche 1 bis 3, wobei der Winkel (α) so gewählt ist, dass frühestens nach 18 Schichten eine Orientierung der Muster vorkommt, die sich um weniger als 10° von einer bereits aufgetretenen Orientierung unterscheidet.

5. Verfahren nach einem der Ansprüche 1 bis 4, wobei der Winkel (α) über die Bauhöhe des zu bildenden Objekts konstant ist, vorzugsweise 67°.

6. Verfahren nach einem der Ansprüche 1 bis 3, wobei der Winkel (α) von Schicht zu Schicht stochastisch bestimmt wird.

7. Verfahren nach Anspruch 6, wobei der Winkel (α) zwischen zwei aufeinanderfolgenden Schichten größer ist als ein vorgegebener Mindestwinkel, vorzugsweise größer als 20° ist.

8. Verfahren nach einem der Ansprüche 1 bis 7, wobei die Verfestigungslinien um einen Drehpunkt (D) gedreht werden,
der außerhalb des Querschnitts des Objekts in der jeweiligen Schicht liegt.

9. Verfahren nach einem der Ansprüche 1 bis 7, wobei die Verfestigungslinien um einen Drehpunkt (D) gedreht werden, .der innerhalb des Querschnitts des Objekts in der jeweiligen Schicht liegt.

10. Verfahren nach einem der Ansprüche 1 bis 9, wobei eine Verfestigungslinie wenigstens aus einem Vektor (V) besteht.

11. Verfahren nach einem der Ansprüche 1 bis 10, wobei die Verfestigungslinien gerade sind.

12. Verfahren nach einem der Ansprüche 1 bis 11, wobei innerhalb einer Schicht eine Mehrfachverfestigung durchgeführt wird.

13. Verfahren nach einem der Ansprüche 1 bis 12, wobei die Verfestigung mittels einer Energiequelle wie einem Laser, einer Elektronenstrahlquelle oder einer andere Wärmequelle erfolgt.

14. Verfahren nach einem der Ansprüche 1 bis 13, wobei das Material ein pulverförmiges Material, beispielsweise ein Metallpulver, ein Kunststoffpulver, ein Keramikpulver oder ein kunststoffummanteltes Keramikpulver oder kunststoffummanteltes Sandpulver oder eine Mischung von Pulvern ist

15. Vorrichtung zum Durchführen des Verfahrens nach einem der Ansprüche 1 bis 14, mit
einem Träger zum Auftragen von Schichten eines verfestigbaren Aufbaumaterials,
einer Verfestigungsvorrichtung zum Verfestigen des Aufbaumaterials an einer Wirkungsstelle in einer Arbeitsebene, wobei die Verfestigungsvorrichtung einen Laser (6) oder eine Elektronenstrahlquelle umfasst,
einer Einrichtung, die eine Relativbewegung zwischen dem Träger und der Wirkungsstelle der Verfestigungsvorrichtung ermöglicht,
**gekennzeichnet durch**
eine Steuereinheit (11), die die
Verfestigungsvorrichtung so steuert, dass die Verfestigungsvorrichtung wenigstens einen Teilbereich einer Schicht so verfestigt, dass ein Muster entsteht, welches eine Mehrzahl von im wesentlichen parallelen Verfestigungslinien (V, S) enthält, und wenigstens einen Teilbereich einer nachfolgenden Schicht so verfestigt, dass ein Muster entsteht, welches eine Mehrzahl von im wesentlichen parallelen Verfestigungslinien enthält, die gegenüber den Verfestigungslinien des Musters der vorhergehenden Schicht um einen Winkel (α) gedreht sind, der verschieden von 180°, 90° und 45° Grad ist,
wobei eine Verfestigungslinie einen Streifen (S) bildet, der eine Mehrzahl von nebeneinander liegenden Vektoren (v) enthält, die sich quer zur Längsrichtung (R) des Streifens erstrecken, wobei
die Steuereinheit (11) den Laser (6) oder die Elektronenstrahlquelle in Beschleunigungs- und Abbremsphasen (20, 30) ausschaltet, in denen der Laser- oder Elektronenstrahl außerhalb des zu belichtenden Bereichs des Streifens (S) liegen würde.

## Claims

1. Method for manufacturing a three-dimensional object by successively solidifying layers of a building material at positions in the respective layer corresponding to the cross-section of the object,
wherein at least a partial region of a layer is solidified such that a pattern is generated that contains a plurality of substantially parallel solidification lines (V, S), and at least a partial region of a subsequent layer is solidified such that a pattern is generated, which contains a plurality of substantially parallel solidification lines that are rotated with respect to the solidification lines of the pattern of the previous layer by an angle (α),
**characterized in that** the angle (α) differs from 180°, 90° and 45°,
wherein a solidification line forms a stripe (S) containing a plurality of adjoining vectors (v) that are extending transversely to the longitudinal direction (R) of the stripe.

2. Method according to claim 1, wherein the solidification lines of a respective partial region are running again substantially parallel to the first solidification lines after at least five subsequent layers.

3. Method according to claim 1 or 2, wherein the partial regions of subsequent layers are lying one above the other.

4. Method according to one of claims 1 to 3, wherein the angle (α) is selected such that after at least approximately 18 layers an orientation of the pattern occurs that differs by less than approximately 10° from an orientation that has already occurred.

5. Method according to one of claims 1 to 4, wherein the angle (α) is constant across the building height of the object to be formed, preferably approximately 67°.

6. Method according to one of claims 1 to 3, wherein the angle (α) is determined at random from layer to layer.

7. Method according to claim 6, wherein the angle (α) between two subsequent layers is larger than a predetermined minimum angle, preferably larger than 20°.

8. Method according to one of claims 1 to 7, wherein the solidification lines are rotated around a center of rotation (D) that lies outside of the cross-section of the object in the respective layer.

9. Method according to one of claims 1 to 7, wherein the solidification lines are rotated around a center of rotation (D) that lies within the cross-section of the object in the respective layer.

10. Method according to one of claims 1 to 9, wherein a solidification line consists of at least one vector (V).

11. Method according to one of claims 1 to 10, wherein the solidification lines are straight.

12. Method according to one of claims 1 to 11, wherein within a layer a repeated solidification is performed.

13. Method according to one of claims 1 to 12, wherein the solidification is effected by means of an energy source such as a laser, an electron beam source or another heat source.

14. Method according to one of claims 1 to 13, wherein the material is a material in powder form such as a metal powder, a plastic powder, a ceramics powder or a plastic-coated ceramics powder or a plastic-coated sand powder or a mixture of powders.

15. Device for performing the method according to one of claims 1 to 14 having
a support for applying layers of a solidifiable building material,
a solidification device for solidifying the building material at a position of action in a working plane, wherein the solidification device comprises a laser (6) or an electron beam source;
a device that enables a relative movement between the support and the position of action of the solidification device,
**characterized by**
a control unit (11) which controls the solidification device such that the solidification device solidifies at least a partial region of a layer such that a pattern is generated that contains a plurality of substantially parallel solidification lines (V, S), and solidifies at least a partial region of a subsequent layer such that a pattern is generated, which contains a plurality of substantially parallel solidification lines that are rotated with respect to the solidification lines of the pattern of the previous layer by an angle (α) which is different from 180°, 90° and 45°,
wherein a solidification line forms a stripe (S) containing a plurality of adjoining vectors (v) that are extending transversely to the longitudinal direction (R) of the stripe, wherein
the control unit (11) switches off the laser (6) or the electron beam source in acceleration and deceleration phases (20, 30), in which the laser or electron beam lies outside of the region of the stripe (S) that is to be exposed.

## Revendications

1. Procédé de fabrication d'un objet tridimensionnel par solidification successive de couches d'un matériau structurant à des emplacements correspondant à la section de l'objet dans chaque couche, où au moins une zone partielle d'une couche est solidifiée de manière à générer un motif comportant une pluralité de lignes de solidification (V, S) sensiblement parallèles, et où au moins une zone partielle d'une couche consécutive est solidifiée de manière à générer un motif comportant une pluralité de lignes de solidification sensiblement parallèles, lesquelles sont décalées d'un angle (α) par rapport aux lignes de solidification du motif de la couche précédente, **caractérisé en ce que** ledit angle (α) est de 180°, 90° ou 45°,
une ligne de solidification forme une bande (S) comprenant une pluralité de vecteurs (v) accolés qui s'étendent perpendiculairement à la direction longitudinale (R) de la bande.

2. Procédé selon la revendication 1, où les lignes de solidification d'une zone partielle correspondante s'étendent de nouveau sensiblement parallèlement aux premières lignes de solidification après cinq couches successives au moins.

3. Procédé selon la revendication 1 ou la revendication 2, où les zones partielles de couches successives sont superposées.

4. Procédé selon l'une des revendications 1 à 3, où l'angle (α) est sélectionné de manière à générer une orientation des motifs, après quelque 18 couches au moins, qui se différencie de moins de 10° environ d'une orientation déjà apparue.

5. Procédé selon l'une des revendications 1 à 4, où l'angle (α) est constant sur la hauteur de l'objet à former, et préférentiellement égal à 67° environ.

6. Procédé selon l'une des revendications 1 à 3, où l'angle (α) est déterminé aléatoirement d'une couche à l'autre.

7. Procédé selon la revendication 6, où l'angle (α) entre deux couches successives est supérieur à un angle minimal prescrit, et de préférence supérieur à 20°.

8. Procédé selon l'une des revendications 1 à 7, où les lignes de solidification sont rotatives autour d'un point de rotation (D) situé à l'extérieur de la section de l'objet dans chaque couche.

9. Procédé selon l'une des revendications 1 à 7, où les lignes de solidification sont rotatives autour d'un point de rotation (D) situé à l'intérieur de la section de l'objet dans chaque couche.

10. Procédé selon l'une des revendications 1 à 9, où une ligne de solidification se compose d'au moins un vecteur (V).

11. Procédé selon l'une des revendications 1 à 10, où les lignes de solidification sont des droites.

12. Procédé selon l'une des revendications 1 à 11, où une solidification multiple est effectuée à l'intérieur d'une même couche.

13. Procédé selon l'une des revendications 1 à 12, où la solidification est effectuée au moyen d'une source d'énergie telle qu'un laser, une source de rayonnement électronique ou une autre source de chaleur.

14. Procédé selon l'une des revendications 1 à 13, où le matériau est un matériau pulvérulent tel qu'une poudre métallique, une poudre de matière plastique, une poudre céramique, une poudre céramique enrobée de matière plastique, une poudre de sable enrobée de matière plastique, ou un mélange de poudres.

15. Appareil pour l'exécution du procédé selon l'une des revendications 1 à 14, avec
un support pour l'application de couches d'un matériau structurant pulvérulent,
un dispositif de solidification pour la solidification du matériau structurant à un emplacement actif sur un plan de travail, ledit dispositif de solidification comprenant un laser (6) ou une source de rayonnement électronique,
un dispositif permettant un déplacement relatif du support et de l'emplacement actif du dispositif de solidification, l'un par rapport à l'autre,
**caractérisé**
**par** une unité de commande (11) qui commande le dispositif de solidification pour que ledit dispositif de solidification solidifie au moins une zone partielle d'une couche de manière à générer un motif comportant une pluralité de premières lignes de solidification (V, S) sensiblement parallèles, et solidifie au moins une zone partielle d'une couche consécutive de manière à générer un motif comportant une pluralité de deuxièmes lignes de solidification sensiblement parallèles, lesquelles sont décalées d'un angle (α) de 180°, 90° ou 45° par rapport aux lignes de solidification du motif de la couche précédente,
une ligne de solidification formant une bande (S) comprenant une pluralité de vecteurs (v) accolés, qui s'étendent perpendiculairement à la direction longitudinale (R) de la bande, et
l'unité de commande (11) désactivant le laser (6) ou la source de rayonnement électronique lors de phases d'accélération et de freinage (20, 30) où le faisceau électronique ou laser serait incident à l'extérieur de la zone exposable de la bande (S).
